**Europäisches Patentamt**

**European Patent Office**

**Office européen des brevets**

(19)

(11) Numéro de publication : **0 395 504 B1**

(12)

# FASCICULE DE BREVET EUROPEEN

(45) Date de publication du fascicule du brevet :
**27.07.94 Bulletin 94/30**

(51) Int. Cl.$^5$ : **B60L 5/32**

(21) Numéro de dépôt : **90401118.6**

(22) Date de dépôt : **25.04.90**

(54) **Dispositif pour régler la force d'appui d'un pantographe sur un fil caténaire et procédé s'y rapportant.**

(30) Priorité : **28.04.89 FR 8905653**

(43) Date de publication de la demande :
**31.10.90 Bulletin 90/44**

(45) Mention de la délivrance du brevet :
**27.07.94 Bulletin 94/30**

(84) Etats contractants désignés :
**AT BE CH DE DK ES FR GB GR IT LI LU NL SE**

(56) Documents cités :
**EP-A- 0 047 819
DE-A- 1 438 818
DE-B- 2 165 813
US-A- 4 572 950
US-A- 4 618 764**

(73) Titulaire : **FAIVELEY TRANSPORT
93 rue du Docteur Bauer
F-93400 Saint-Ouen Cédex (FR)**

(72) Inventeur : **Cathala, Jacques
Les Vallées
F-37510 Ballan-Mire (FR)**
Inventeur : **Forte, Pascal
11 Place Ingres
F-37200 Tours (FR)**

(74) Mandataire : **Keib, Gérard et al
Bouju Derambure (Bugnion) S.A.
38, avenue de la Grande Armée
F-75017 Paris (FR)**

EP 0 395 504 B1

Jouve, 18, rue Saint-Denis, 75001 PARIS

**Description**

L'invention concerne un dispositif pour régler la force d'appui d'un pantographe d'une rame ferroviaire sur un fil caténaire.

Elle vise également le procédé mis en oeuvre dans le dispositif selon l'invention.

Des rames ferroviaires à très grande vitesse empruntent certaines lignes équipées en caténaires classiques à hauteur variable. L'effort de contact des pantographes de ces rames sur les fils caténaires se trouve considérablement modifié lorsque des violentes rafales de vent viennent perturber le captage du courant. Actuellement, la vitesse des rames est réduite en cas d'alerte météorologique signalant ces coups de vent.

Il s'agit donc de disposer d'un dispositif permettant de rendre le pantographe moins sensible aux bourrasques passagères en contrôlant l'effort qui lui est appliqué.

Une solution envisagée à ce problème consisterait à réaliser un asservissement en boucle fermée de la force d'appui du pantographe sur le fil caténaire. Il s'agirait alors de concevoir un dispositif électromécanique d'actionneur piloté en permanence suivant des techniques bien connues d'asservissement. L'organe actionneur peut être électrique, hydraulique et de préférence pneumatique.

Mais un dispositif d'asservissement en boucle fermé présente, dans le contexte précis d'un équipement de rame ferroviaire, plusieurs inconvénients parmi lesquels on peut citer :

- la nécessité d'une consommation permanente d'énergie pour maintenir l'asservissement dans le cas d'un actionneur pneumatique, qui se traduit par une consommation d'air non négligeable,
- des problèmes éventuels de stabilité de l'asservissement et de fiabilité des éléments de la boucle fermée,
- la relative complexité d'un tel dispositif et un coût élevé.

Il est connu par la demande de brevet allemand examinée DE-B-2165813, un dispositif pour régler la force d'appui d'un pantographe sur un fil caténaire comprenant :

- des moyens pour mesurer l'effort de contact entre l'archet et le fil caténaire et délivrer des informations correspondant sensiblement à l'effort délivré, lesdits moyens de mesure étant situés à proximité immédiate de l'archet.
- des moyens pour transmettre les informations de mesure dans une zone appropriée de la rame ferroviaire,
- des moyens de traitement d'information pour traiter les informations transmises et des signaux de consigne et pour délivrer des signaux logiques de commande,
- des moyens de commande pour commander lesdits moyens actionneurs à partir desdits signaux logiques de commande, en réponse à des signaux de commande extérieure prédéterminés.

Il est également connu de la demande de brevet allemand DE-A-1438818 un dispositif de sécurité pour pantographe. Ce document enseigne un contrôle en boucle ouverte de la hauteur du pantographe.

Le but de l'invention est de remédier aux inconvénients de l'Art connu en proposant un dispositif pour régler la force d'appui d'un pantographe d'une rame ferroviaire sur un fil caténaire, ledit pantographe comprenant à son extrémité supérieure un archet en contact mécanique et électrique avec le fil caténaire, et étant relié mécaniquement à des moyens actionneurs lui appliquant un effort nominal en des points et suivant une direction prédéterminés. Un tel dispositif doit présenter une moindre consommation d'énergie et une fiabilité accrue.

L'invention a donc pour objet un dispositif pour régler la force d'appui d'un pantographe d'une rame ferroviaire sur un fil caténaire, ledit pantographe comprenant à son extrémité supérieure un archet en contact mécanique et électrique avec le fil caténaire, et étant relié mécaniquement à des moyens actionneurs lui appliquant un effort nominal en des points et suivant une direction prédéterminés, le dispositif comprenant:

- des moyens pour mesurer l'effort de contact entre l'archet et le fil caténaire et délivrer des informations correspondant sensiblement à l'effort mesuré, lesdits moyens de mesure étant situés à proximité immédiate de l'archet,
- des moyens pour transmettre les informations de mesure depuis lesdits moyens de mesure dans une zone appropriée de la rame ferroviaire,
- des moyens de traitement d'informations (60, 20) pour traiter les informations transmises et des signaux de consigne et pour délivrer des signaux logiques de commande, et
- des moyens de commande pour commander lesdits moyens actionneurs à partir desdits signaux logiques de commande, caractérisé en ce que en outre lesdits signaux de consigne comprennent un seuil maximum prédéterminé d'effort de contact admissible et un seuil minimum prédéterminé d'effort de contact admissible et en ce que lesdits moyens de commande ne commandent lesdits moyens actionneurs à partir desdits signaux logiques de commande que lorsque ledit effort de contact mesuré est, soit supérieur audit seuil maximum, soit inférieur audit seuil minimum.

Ainsi le dispositf selon l'invention permet d'atteindre l'objectif précité de maintien de la force d'appui du pantographe au sein d'une gamme prédéterminée d'effort tout en mettant en oeuvre un simple système en boucle ouverte. On dispose alors d'une mesure, d'une comparaison et d'une détection d'effort de contact limite, qui ont pour effet une commande ponctuelle des moyens actionneurs en cas d'excursion hors de la gamme d'efforts tolérés. Les moyens actionneurs n'étant commandés qu'en cas de franchissement du seuil maximum fixé, il en résulte une économie d'énergie et une grande simplification de l'asservissement. Par ailleurs, il est toujours possible d'intervenir directement sur les moyens actionneurs, par exemple pour la montée et la descente du pantographe, par le biais de signaux de commande extérieurs.

L'invention a encore pour objet un procédé pour régler la force d'appui d'un pantographe d'une rame ferroviaire sur un fil caténaire, mis en oeuvre dans le dispositif selon l'une des revendications précédentes, le pantographe étant relié à des moyens actionneurs commandés lui appliquent un effort nominal en des points et suivant une direction prédéterminés, comprenant une étape de mesure de l'effort de contact entre l'archet du pantographe et le fil caténaire, une étape de comparaison de l'effort mesuré avec des valeurs de consigne, caractérisé en ce que lesdites valeurs de consigne comprennent un seuil maximum prédéterminé d'effort de contact admissible et un seuil minimum prédéterminé d'effort de contact admissible et en ce qu'il comprend une étape de détection de franchissement dudit seuil maximum ou dudit seuil minimum, et une étape de modification du réglage d'effort desdits moyens actionneurs effectuée seulement lorsque l'effort de contact mesuré dépasse soit ledit seuil maximum d'effort , soit ledit seuil minimum d'effort.

Avec ce procédé, il est devenu possible de régler la force d'appui du pantographe en disposant d'une mesure instantanée d'effort de contact qui est comparée à un seuil maximum. La modification du réglage d'effort, à savoir la diminution de l'effort appliqué par les moyens actionneurs par rapport à l'effort nominal, n'est affectée qu'en cas de détection.

Le procédé comprend en outre une étape de comparaison de l'effort mesuré à un seuil minimum d'effort de contact et de détection de franchissement dudit seuil minimum et on modifie en outre le réglage d'effort desdits moyens actionneurs lorsque l'effort de contact mesuré est inférieur audit seuil minimum d'effort.

Grâce à cette consigne de seuil minimum d'effort, la fiabilité du captage est encore améliorée, l'augmentation de l'effort appliqué par les moyens actionneurs n'intervenant qu'en cas de détection de franchissement du seuil minimumm.

Dans une forme de réalisation préférée de l'invention, les moyens actionneurs comprennent au moins un coussin pneumatique appliquant, par des moyens de liaison mécanique, un effort réglable sur le pantographe et relié par des moyens d'alimentation pneumatique électriquement isolante aux moyens de commande.

Le coussin pneumatique utilisé comme actionneur du pantographe se trouve alors au potentiel du pantographe. Des moyens d'alimentation pneumatique isolante sont alors prévus pour assurer l'isolation électrique entre l'actionneur et les moyens de commande qui se situent à l'intérieur de la rame ferroviaire. Le dispositif selon l'invention est fort bien adapté à une application à des systèmes actionneurs pneumatiques. En effet, un coussin pneumatique soumis à une pression d'air nominale maintiendra en permanence sans autre intervention, un effort déterminé sur le pantographe. En cas de rafale de vent et de détection d'un effort de contact de l'archet en dehors de la gamme d'effort toléré, la diminution ou l'augmentation nécessaire de l'effort appliqué au pantographe sera obtenue par une simple purge ou par alimentation en air comprimé, de durée prédéterminée, du coussin pneumatique.

Dans une version avantageuse de l'invention, les moyens de mesure d'effort comprennent un capteur d'effort par microcourbures de fibres optiques, monté à proximité immédiate de la bande de contact de l'archet, et les moyens de transmission d'informations comprennent un faisceau de fibres optiques, relié, d'une part, au capteur d'effort par des moyens de connexion et d'autre part, au sein de la zone appropriée de la rame ferroviaire, aux moyens de conditionnement et de filtrage comportant une unité de conversion de signaux optiques en signaux électriques et une unité de filtrage des signaux convertis.

L'utilisation de fibres optiques dans le dispositif de régulation d'effort selon l'invention présente l'avantage majeur sur tout autre système d'assurer une parfaite isolation électrique entre les éléments du pantographe sous haute tension et les unités de commande situées à l'intérieur de la rame ferroviaire. De plus, ce type de capteur à fibres optiques présente une très bonne sensibilité, un faible encombrement et une masse négligeable devant celle de l'archet, ce qui représente un point positif quand on connaît l'importance de disposer d'un équipage mobile de masse et donc d'inertie les plus faibles possible afin d'améliorer le comportement dynamique de celui-ci.

En outre, il est prouvé que les transmissions par fibre optique présentent un très haut niveau d'immunité au bruit et aux parasites.

D'autres particularités et avantages de l'invention apparaîtront encore dans la description ci-après. Aux dessins annexés, donnés à titre d'exemple non limitatifs,

- la figure 1 est une vue schématique d'ensemble d'un dispositif de régulation d'effort selon l'invention,

- la figure 2 est une vue descriptive simplifiée d'un pantographe pouvant être doté d'un dispositif de régulation selon l'invention,
- la figure 3 est un diagramme illustrant l'évolution de la force moyenne de contact archet/caténaire en fonction du temps, lorsque le dispositif de la figure 1 est mis en oeuvre dans le cas d'une rafale de forte intensité,
- la figure 4 est un diagramme illustrant l'évolution de la force moyenne de contact archet/caténaire en fonction du temps, dans le cas d'une rafale de faible intensité,
- la figure 5 est une vue schématique d'un mode de réalisation d'un capteur d'effort à fibres optiques.

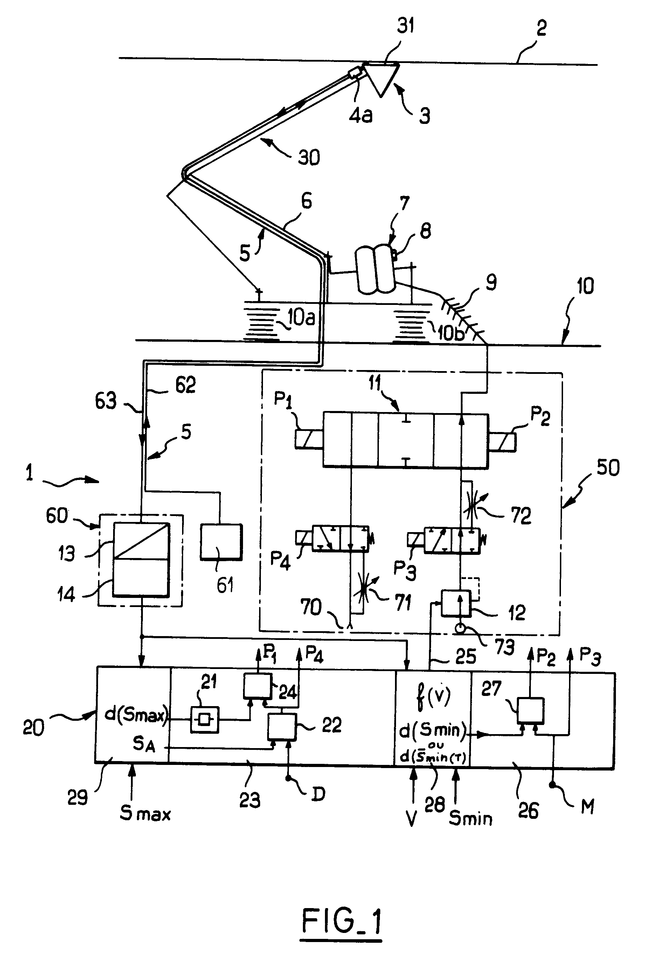

Le dispositif 1 selon l'invention comprend, en référence à la figure 1, un dispositif de détection d'effort 31 situé sur l'archet 3 du pantographe 30 d'une locomotive ou plus généralement d'une rame ferroviaire.

Ce dispositif de détection d'effort 31 a pour fonction de détecter/mesurer l'effort de contact Fc entre l'archet 3 et le fil caténaire 2. Il utilise de préférence au moins un capteur d'effort par microcourbure de fibres optiques, qui sera décrit ultérieurement, ou tout autre capteur d'effort permettant d'appréhender deux seuils d'effort de contact.

Le pantographe 30 est équipé d'un actionneur d'équilibrage par coussin pneumatique 7 ou tout autre dispositif d'équilibrage actif pilotable, agissant par le biais d'un bras 6 de structure tubulaire sur le pantographe 30.

Des isolateurs 10a, 10b assurent, suivant une technique bien connue, l'isolation électrique entre le pantographe 30 sous haute tension et la structure de la rame 10.

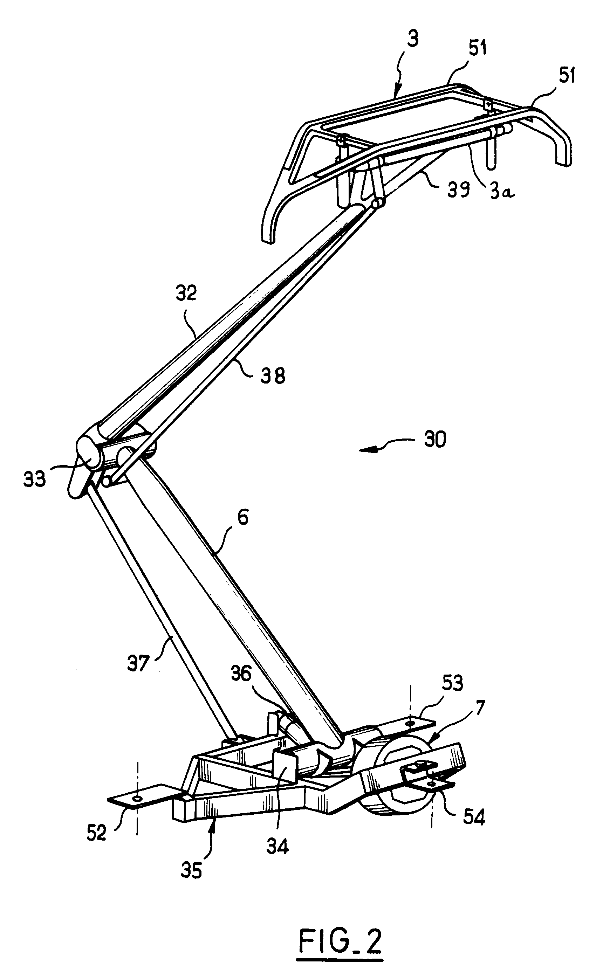

Le pantographe 30, représenté à titre d'exemple en figure 2, est du type unipalette sous une tension de 25 kV. Il comprend un archet 3 comportant une armature et des bandes de frottement 51, munies de capteurs. Il comprend en outre une structure de base 35 permettant le montage du pantographe 30 sur le toit d'une rame ferroviaire par des brides 52, 53 et 54 et comportant le coussin pneumatique actionneur 7 et une articulation principale 34. Il comporte en outre un bras supérieur 32 de structure tubulaire et des barres de parallélogramme inférieure et supérieure 37, 38. Les bras inférieur et supérieur 6, 32, sont reliés par une deuxième articulation principale 33 le bras supérieur étant relié à l'archet 3 par une pièce de liaison 39 et une articulation supérieure 3a.

L'équilibrage du pantographe 30 est assuré par le coussin pneumatique 7 qui agit, de façon connue, sur le bras inférieur 6 par l'intermédiaire d'un système came-élingue, non représenté.

Le dispositif 1 selon l'invention comprend en outre en référence à la figure 1, un système de commande 50 du coussin pneumatique 7, au moins un faisceau de fibres optiques 5 pour l'acheminement des informations issues du capteur d'effort 31 et assurant l'isolation électrique, un système 60 de traitement de signal comprenant un convertisseur optique 13 bidirectionnel et un dispositif de filtrage 14, et une unité 20 d'électronique de commande. Le système de commande pneumatique 50, le système de traitement du signal 60 et l'unité 20 d'électronique de commande sont situés sur la locomotive équipée du dispositif selon l'invention. Les faisceaux de fibre optique 5 sont de préférence logés à l'intérieur des pièces tubulaires 6, 32 du pantographe 30 et sont ainsi protégés contre le vent et les intempéries. Ces faisceaux de fibres optiques 5 assurent la liaison entre le capteur d'effort 31 et l'unité d'électronique de commande 20 via le système 60 de traitement de signal, tandis qu'une canalisation pneumatique isolante 9 amène l'air nécessaire à l'actionnement du coussin pneumatique 7 qui est au potentiel du pantographe 30. Un connecteur optique 4a est prévu pour relier le faisceau 5 au capteur d'effort 31 situé sur l'archet 3.

Une source lumineuse 61 est prévue pour émettre un signal lumineux dans un premier groupe de fibres optiques 62 qui achemine le signal lumineux vers le capteur d'effort 31. Un second groupe de fibres optiques 63 assure le retour de l'information optique représentative de l'effort de contact archet/caténaire Fc vers le convertisseur 13. La réunion des deux groupes de fibres optiques 62, 63 forme le faisceau de fibres optiques 5 précité.

Le système de commande pneumatique 50 comprend une électrovalve pneumatique 11 du type 3/1 à centre fermé commandée par deux électrovalves P1, P2, elles-mêmes alimentées par des signaux émis par l'unité d'électronique de commande 20. L'électrovalve 3/1 11 pilote la pression dans le coussin pneumatique 7 muni d'un clapet de sécurité 8. Le système de commande pneumatique 50 comporte en outre deux électrovalves P3, P4 montées en parallèle assurant respectivement les phases de montée et de descente du pantographe 30, commandées par des signaux issus de l'unité d'électronique de commande 20, et un régulateur 12 piloté via une liaison électrique 25 par un module 28 de l'unité 20, et destiné à assurer, de façon connue, une loi d'effort statique prédéterminée f(v) sur l'archet 3 en fonction de la vitesse V de la locomotive, le régulateur 12 étant relié, par une alimentation en air 73 à un compresseur non représenté. Lorsque l'électrovalve P3 n'est pas alimentée, l'air s'écoule directement du régulateur piloté 12 vers la partie de l'électrovalve 3/3 11 commandée par l'électrovalve P2. A l'inverse, lorsque la valve P3 est activée, l'air s'écoule entre ces deux mêmes portions du circuit pneumatique 50, mais à travers un premier limiteur de débit 72.

De façon semblable, lorsque l'électrovalve P4 est désactivée (respectivement activée) l'air s'écoule directement (respectivement à travers un second limiteur de débit 71) de la partie de l'électrovalve 3/1 11 commandée par l'électrovalve P1 vers une mise à l'atmosphère, ou purge, 70.

L'unité d'électronique de commande 20 assure , d'une part, le traitement logique des informations de détection de franchissement des seuils prédéterminés issues du capteur d'effort 31 et conditionnées par le système de traitement du signal 60, et d'autre part, la commande des quatre électrovalves P1, P2, P3, P4 du système de commande pneumatique 50 en fonction desdites informations de détection et de consignes de fonctionnement. L'unité d'électronique 20 comprend un module 29 de traitement du seuil d'effort maximum Smax, qui peut générer un signal de détection d(Smax) lorsque le capteur d'effort 31 a mesuré un effort supérieur à la consigne Smax, et un signal d'avarie $S_A$ lorsqu'une absence de transmission signal d'effort (due par exemple à une défaillance du capteur ou à une rupture du faisceau) est détectée. L'unité d'électronique de commande comprend en outre un module 23 de traitement logique des signaux d(Smax) et $S_A$, ayant pour fonction de générer les signaux de commande des électrovalves P1 et P4, et prenant aussi en compte une commande extérieure D de descente du pantographe 30. Le module 23 sera désigné dans la suite par module de descente.

Le module 28 assure le traitement des signaux d'entrée : de vitesse V de la locomotive, de consigne de seuil minimum d'effort Smin, et du signal d'effort mesuré par le capteur d'effort et prétraité et mis en forme auparavant par le système de traitement du signal 60. Ce module 28 génère en retour un signal de commande du régulateur pilote 12 et un signal de détection de seuil minimum d(Smin), le signal de commande du régulateur étant sous la forme précitée d'une loi prédéterminée d'effort statique f(v) en fonction de la vitesse V de la locomotive. Le signal de détection de seuil minimum d(Smin) est placé en entrée d'un module 26 de traitement logique du signal d(Smin) et d'un signal M de demande de montée du pantographe 30, qui génère en retour deux signaux de commande respective des électrovalves P2 et P3, et qui est désigné dans la suite par module de montée.

Le module de descente 23 comprend un circuit 21 de génération d'un signal de délestage de durée prédéterminée $\tau$ à partir de la détection d(Smax) du franchissement du seuil d'effort maximum, (par exemple, un circuit de type monostable), une première porte logique OU 22 ayant pour entrées le signal d'avarie $S_A$ et le signal de commande extérieure de descente D, et dont la sortie est reliée d'une part à la ligne de commande de l'électrovalve P4, et d'autre part, à une entrée d'une seconde porte logique OU 24. Cette seconde porte logique 24 a pour deuxième entrée la sortie du circuit de temporisation 21 précité et génère en sortie le signal de commande de l'électrovalve P1.

Le module de montée 26 comprend une troisième porte logique OU 27 ayant comme entrées, le signal de détection de seuil minimum d(Smin) et le signal de commande extérieure de montée M, et générant en sortie le signal de commande de l'électrovalve P2, l'électrovalve P3 étant directement commandé par le signal de commande extérieure de montée M.

On va maintenant décrire le fonctionnement du dispositif de limitation selon l'invention en référence aux figures 1 à 4, en même temps que le procédé selon l'invention.

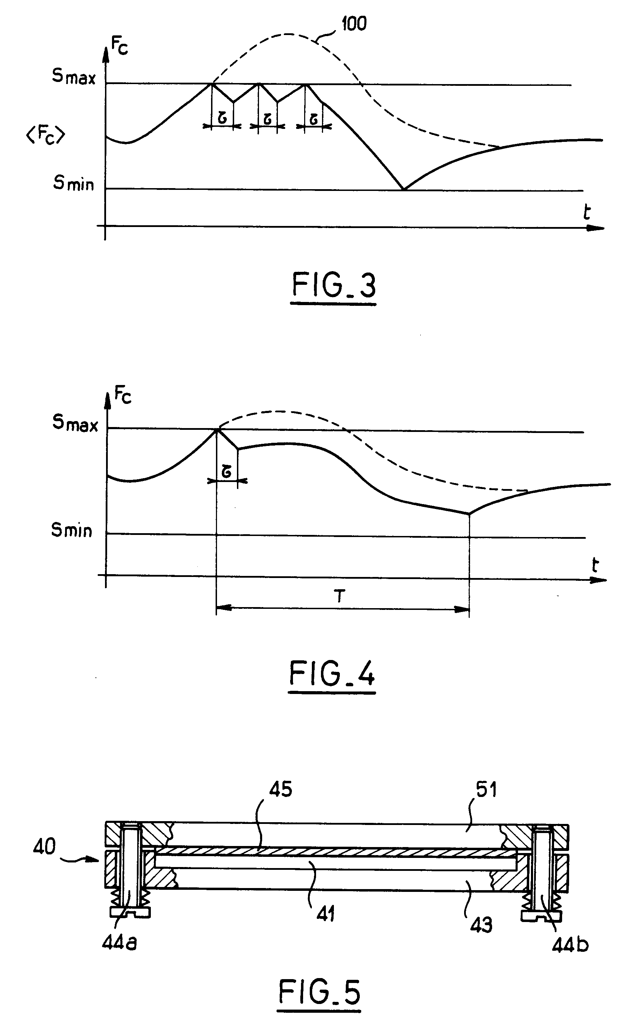

Lors d'une rafale de vent importante au niveau du pantographe 30 et du fil caténaire 2, la force de contact entre l'archet 3 et le fil caténaire 2 augmente considérablement,et en l'absence d'un dispositif de limitation, peut suivre une évolution telle que représentée par la courbe 100, en traits discontinus sur la figure 3 où Fc désigne la force de contact, la vitesse de la locomotive étant supposée stabilisée.

Avec le dispositif selon l'invention, la comparaison effectuée dans le module de traitement 29 entre l'effort mesuré par le capteur d'effort et la consigne Smax conduit à une détection de seuil et à une purge du coussin pneumatique 7 d'une quantité d'air prédéterminée pendant un temps prédéterminé $\tau$. Cette purge est répétée jusqu'à ce que l'effort de contact, moyen mesuré <Fc> n'atteigne plus le seuil Smax. Lorsque la rafale faiblit, l'effort de contact <Fc> diminue jusqu'à atteindre le seuil minimum d'effort Smin.

Cette détection entraîne la commande de l'électrovalve de gonflage P2 pour accroître et rétablir la pression nominale du coussin pneumatique 7 et obtenir un effort de contact moyen compris dans la gamme [Smin, Smax].

Dans le cas d'une rafale de vent faible, il est possible que le seuil minimum ne soit pas détecté, comme l'illustre la figure 4. A l'issue de la dernière purge de durée prédéterminée $\tau$, l'effort de contact mesuré reste compris dans la gamme normale d'effort [Smin, Smax]. On rétablit alors systématiquement la pression nominale dans le coussin pneumatique 7 au bout d'un temps d'attente prédéterminé T, ce qui comprend au signal de sortie du modèle 28 : d ($\overline{\text{Smin}}$(T) (voir figure 1).

Si par contre, une rafale de vent crée une déportance globale de l'archet 3, le seuil minimum Smin est détecté en premier. On augmente alors la pression du coussin pneumatique 7 par paliers successifs de façon à maintenir l'effort de contact supérieur à Smin jusqu'à disparition de la rafale. On ramène ensuite le coussin 7 à sa pression nominale dès l'apparition du signal de détection d'effort maximum ou si le laps de temps T s'est écoulé depuis l'apparition du dernier signal d(Smax).

Les consignes de seuil Smax et Smin sont préréglables en fonction du type de caténaire, et de caractéristiques spécifiques du pantographe ainsi équipé. Afin d'assurer un bon captage de courant, dans tous les cas, Smin ne devra pas être inférieure à une valeur minimale, par exemple de l'ordre de 4 à 5 daN, assurant toujours le contact de l'archet 3 sur le fil caténaire 2.

Le dispositif de limitation 1 selon l'invention assure également une descente automatique du pantographe 30 lors d'une rupture d'informations issues du capteur d'effort 31, qui peut être due à une avarie survenue sur la tête de captage ou à une rupture accidentelle du faisceau optique 5, ainsi que les fonctions normales de montée et de descente du pantographe 30.

Ainsi, si un signal de commande extérieure de montée est appliquée en entrée M de l'unité d'électronique de commande 20, les électrovalves P2 et P3 sont activées et conduisent à la mise sous pression du coussin pneumatique 7 et donc à la montée à vitesse contrôlée du pantographe. Si en revanche, une commande extérieure de descente en appliquée en entrée D, quel que soit la valeur du signal d'avarie $S_A$, la porte logique 22 émettra en sortie, un niveau logique 1 et les électrovannes P1 et P4 seront commandées, provoquant la purge complète du coussin pneumatique 7 et donc la descente à vitesse contrôlée du pantographe.

Le fonctionnement du circuit pneumatique 50 sera mieux compris à la lecture des trois exemplaires d'opérations ci-dessous :

1) Montée du pantographe

Lors de la montée du pantographe, les électrovalves P3 et P2 sont alimentées dès l'apparition du signal de montée M. L'air à la pression désirée, issu du régulateur piloté 12, traverse le premier limiteur de débit 72. Pendant une durée réglable, le pantographe monte à la vitesse désirée sous l'action du coussin pneumatique 7 et accoste doucement le fil caténaire 10. Puis l'électrovalve P3 bascule et l'alimentation du coussin 7 se fait à plein débit. Le limiteur de débit 72 et l'électrovalve P3 règlent donc le temps de montée du pantographe.

2) Descente du pantographe

Lors de la descente du pantographe, les électrovalves P1 et P4 sont alimentées. Le coussin pneumatique 7 sous pression est mis à la purge 70 par l'électrovalve P1 et le débit de purge est contrôlé par le second limiteur de débit 71 que l'électrovalve P4 a fait intervenir dans le circuit. La durée de la purge est réglée de sorte que P4 change d'état une fois que le pantographe est arrivé sur ses butées basses.

3) Détection du seuil Smax en condition de captage

L'électrovalve 3/1 11, commandée par les deux électrovalves P2 et P3, assure les liaisons pneumatiques données par le tableau I, où 1 (respectivement 0) indique que l'électrovalve correspondante est (respectivement, n'est pas) alimentée par l'unité d'électronique de commande 20.

| Etat de P1 | Etat de P2 | Liaisons pneumatiques |
|---|---|---|
| 0 | 0 | Coussin 7 isolé |
| 0 | 1 | Admission d'air au coussin 7 |
| 1 | 0 | Mise à la purge 70 |

TABLEAU I

On suppose que le pantographe 30 est en position de captage, c'est-à-dire que la phase de montée (voir exemple 1) est terminée. L'électrovalve P3 est désactivée : il y a donc plein débit sur l'admission d'air. La pression dans le coussin 7 est régulée à la valeur de consigne. Lors d'un franchissement du seuil maximum d-(Smax),l'électronique de commande 20 fait basculer P2 sur 0, et envoie un signal impulsionnel sur P1 de durée prédéterminée $\tau$, ce qui a pour effet de délester le coussin d'une quantité d'air nécessaire et suffisante pour diminuer légèrement l'effort de contact archet/caténaire. Ce cycle est répété tant que d(Smax) est présent. Lorsque d(Smax) a disparu, on réinjecte la pression nominale dans le coussin 7 à l'apparition de d(Smin), ou si d(Smin) n'intervient pas pendant le temps d'attente T compté à partir de la dernière information d(Smax).

Par ailleurs, le régulateur pilote 12 assure une modulation de l'effort statique en fonction de la vitesse V de la locomotive, suivant la loi prédéterminée f(v).

En effet, plus la vitesse V augmente, plus il est nécessaire d'augmenter la composante majeure de l'effort de contact de façon à assurer un bon captage, en relativisant les phénomènes dynamiques.

La figure 5 illustre de façon schématique une forme de réalisation effective d'un capteur d'effort basé sur la création de microcourbures de fibres optiques placées entre deux surfaces provoquant leur déformation.

Les brevets américains 4 618 764 et 4 572 950 divulguent des détecteurs de pression à fibre optique de ce type.

L'analyse des phénomènes mis en jeu montre que, dans une certaine plage d'effort réglable, la perte d'énergie lumineuse due aux microcourbures est une fonction linéaire de la charge de contrainte.

Le capteur d'effort 40 comprend au moins une fibre optique 41 prise entre une armature 43 et un isolant thermique 45, lui-même adjacent à la bande 51 de l'archet. Des vis 44a, 44b assurent une précontrainte des fibres optiques 41.

Bien entendu, l'invention n'est pas limitée aux exemples décrits et représentés et de nombreux aménagements peuvent être apportés à ces exemples sans sortir du cadre de l'invention.

On peut ainsi envisager d'autres types de capteurs d'effort, par exemple des capteurs piézoélectriques ou à jauges de contrainte, à la condition de résoudre les problèmes cruciaux d'isolation électrique.

On peut ainsi prévoir d'autres types d'actionneurs du pantographe, par exemple des actionneurs électromécaniques.

## Revendications

1. Dispositif (1) pour régler la force d'appui d'un pantographe (30) d'une rame ferroviaire (10) sur un fil caténaire (2), ledit pantographe (30) comprenant à son extrémité supérieure un archet (3) en contact mécanique et électrique avec le fil caténaire (2), et étant relié mécaniquement à des moyens actionneurs (7, 34) lui appliquant un effort nominal en des points et suivant une direction prédéterminés, le dispositif comprenant:
   - des moyens (31, 40) pour mesurer l'effort de contact entre l'archet (3) et le fil caténaire (2) et délivrer des informations correspondant sensiblement à l'effort mesuré, lesdits moyens de mesure 31, 40) étant situés à proximité immédiate de l'archet (3),
   - des moyens (5, 4a) pour transmettre les informations de mesure depuis lesdits moyens de mesure (31, 40) dans une zone appropriée de la rame ferroviaire (10),
   - des moyens de traitement d'informations (60, 20) pour traiter les informations transmises et des signaux de consigne et pour délivrer des signaux logiques de commande, et
   - des moyens de commande (50) pour commander lesdits moyens actionneurs (7, 34) à partir desdits signaux logiques de commande, caractérisé en ce que en outre lesdits signaux de consigne comprennent un seuil maximum prédéterminé d'effort de contact admissible (Smax) et un seuil minimum prédéterminé d'effort de contact admissible (Smin) et en ce que lesdits moyens de commande (50) ne commandent lesdits moyens actionneurs (7, 34) à partir desdits signaux logiques de commande que lorsque ledit effort de contact mesuré est, soit supérieur audit seuil maximum (Smax), soit inférieur audit seuil minimum (Smin).

2. Dispositif (1) selon la revendication 1 caractérisé en ce que lesdits moyens de traitement d'informations (60, 20) comprennent des moyens (28, 29) pour comparer les informations de mesure transmise respectivement auxdits signaux de seuil minimum et maximum d'effort de contact (Smin, Smax).

3. Dispositif (1) selon la revendication 2, caractérisé en ce que lesdits signaux de consigne comprennent en outre des signaux de commande extérieure de montée (M) et de descente (D) du pantographe (30).

4. Dispositif (1) selon la revendication 3, caractérisé en ce que les moyens actionneurs (7, 34) comprennent au moins un coussin pneumatique (7) appliquant par des moyens de liaison mécanique (6, 37, 31, 32, 33, 34) un effort réglable sur le pantographe (30), et relié par des moyens d'alimentation pneumatique électriquement isolante (9) aux moyens de commande (50).

5. Dispositif (1) selon la revendication 4, caractérisé en ce que les moyens de commande (50) comprennent des moyens (11, P1, P2, P3, P4) pour alimenter sélectivement en air le coussin pneumatique (7) en fonction des signaux de commande issus des moyens de traitement d'informations (60, 20).

6. Dispositif (1) selon la revendication 5, caractérisé en ce que les moyens de commande (50) comprennent une électrovalve pneumatique (11) à centre fermé, dotée respectivement d'une électrovalve ( P1) de purge et d'une électrovalve (P2) de gonflage et reliée respectivement à une électrovalve (P4) de descente à vitesse contrôlée et à une électrovalve (P3) de montée à vitesse contrôlée, chacune desdites électrovalves (P1, P2, P3, P4) étant respectivement pilotées par un signal de commande correspondant issu desdits moyens de traitement d'informations (60, 20).

7. Dispositif (1) selon l'une des revendications 5 ou 6, caractérisé en ce que les moyens de commande (50) comprennent en outre un régulateur piloté (12) alimentant l'électrovalve (P3), et commandé par les moyens de traitement d'informations (60, 20) selon une loi de commande prédéterminée f(v) en fonction de la vitesse (v) de la rame ferroviaire (10).

8. Dispositif (1) selon la revendication 7, caractérisé en ce que les moyens de traitement d'informations (60, 20), comprenant des moyens (60) de conditionnement et de filtrage des signaux issus des moyens de transmission (5) et des moyens d'électronique de commande (20) comportant:
   - lesdits moyens (28, 29) de comparaison, qui comprennent des moyens pour délivrer des signaux de détection (d(Smin), d(Smax)), les moyens (29) de comparaison de seuil maximum comprenant en outre des moyens pour détecter, à partir des informations transmises, une situation d'avarie au niveau de l'archet (3) et délivrer un signal d'avarie (Sa) en vue d'une descente systématique du pantographe (30),
   - des moyens (23) de commande de descente du pantographe (30) reliés aux moyens (29) de comparaison de seuil maximum, recevant les signaux de détection de seuil maximum (d(Smax)) et d'avarie (Sa) et le signal de commande extérieure de descente (D) et délivrant les signaux de commande respectifs des électrovalves de purge (P1) et de descente à vitesse contrôlée (P4), et des moyens (26) de commande de montée du pantographe (30) reliés aux moyens de comparaison de seuil minimum, recevant le signal de détection de seuil minimum (d(Smin)) et délivrant les signaux de commande respectifs des électrovalves de gonflage (P2) et de montée à vitesse contrôlée (P3).

9. Dispositif (1) selon la revendication 8, caractérisé en ce que les moyens (23) de commande de descente comprennent des moyens (21) pour délivrer à partir du signal de détection dudit seuil minimum (d(Smin)), un signal de commande de purge de durée redéterminée ($\tau$).

10. Dispositif (1) selon la revendication 9, caractérisé en ce que les moyens (23) de commande de descente comprennent une première porte logique OU (22) à deux entrées, auxquelles sont respectivement appliqués le signal d'avarie (Sa) et le signal de commande extérieure de descente (D), et une seconde porte logique OU (24) à deux entrées auxquelles sont respectivement appliqués le signal de commande de purge et la sortie de la première porte logique OU (24), les sorties respectives des première et seconde porte logiques (22, 24) fournissant respectivement les signaux de commande des électrovalves de descente à vitesse contrôlée (P4) et de purge (P1).

11. Dispositif (1) selon l'une des revendications 9 ou 10, caractérisé en ce que les moyens (26) de commande de montée comprennent une troisième porte logique OU (27) à deux entrées auxquelles sont appliqués respectivement le signal de détection de seuil minimum (d(Smin)) et le signal de commande extérieure de montée (M), la sortie de la troisième porte logique OU (27) fournissant le signal de commande de l'électrovalve de gonflage (P2) et le signal de commande de l'électrovalve de montée à vitesse contrôlée (P3).

12. Dispositif (1) selon l'une des revendications 1 à 11 caractérisé en ce que les moyens de mesure d'effort comprennent un capteur d'effort (31, 40) par microcourbures de fibres optiques, monté à proximité immédiate d'au moins une bande de contact (51) de l'archet (3), et en ce que les moyens de transmission d'informations comprennent un faisceau (5) de fibres optiques, relié d'une part au capteur d'effort par des moyens de connexion (4a) et d'autre part, au sein de la zone appropriée de la rame ferroviaire (10), aux moyens de conditionnement et de filtrage (60) comportant une unité (13) de conversion de signaux optiques en signaux électriques et une unité (14) de filtrage des signaux convertis.

13. Dispositif (1) selon la revendication 12, caractérisé en ce que le capteur d'effort (40) comprend une couche de fibres optiques de mesure (41) insérée entre une bande de contact (51) et une armature (43) de l'archet, une couche d'isolant thermique (45) étant placée en interface entre la couche de fibres optiques (41) et la bande de contact (51), l'ensemble ainsi constitué étant maintenu en précontrainte par des moyens de serrage (44a, 44b).

14. Procédé pour régler la force d'appui d'un pantographe (30) d'une rame ferroviaire (10) sur un fil caténaire (2), mis en oeuvre dans le dispositif selon l'une des revendications précédentes, le pantographe (30) étant relié à des moyens actionneurs (7) commandés lui appliquant un effort nominal en des points et suivant une direction prédéterminés, comprenant une étape de mesure de l'effort de contact (Fc) entre l'archet (3) du pantographe (30) et le fil caténaire (2), une étape de comparaison de l'effort mesuré (Fc) avec des valeurs de consigne, caractérisé, en ce que lesdites valeurs de consigne comprennent un seuil maximum prédéterminé d'effort de contact admissible (Smax) et un seuil minimum prédéterminé d'effort de contact admissible (Smin) et en ce qu'il comprend une étape de détection de franchissement dudit seuil maximum (Smax) ou dudit seuil minimum (Smin), et une étape de modification du réglage d'effort desdits moyens actionneurs (7) effectuée seulement lorsque l'effort de contact mesuré (Fc) dépasse soit ledit seuil maximum d'effort (Smax), soit ledit seuil minimum d'effort (Smin).

15. Procédé selon la revendication 14 caractérisé en ce que l'étape de modification comprend, si l'effort de contact mesuré est supérieur au seuil maximum d'effort (Smax), une étape de diminution d'effort appliqué par les moyens actionneurs (7, 34).

16. Procédé selon la revendication 15, caractérisé en ce que l'étape de modification comprend, si l'effort de contact mesuré est inférieur au seuil minimum d'effort (Smin), une étape de retour à l'effort nominal appliqué par les moyens actionneurs (7).

17. Procédé selon l'une des revendications 14 à 16, caractérisé en ce que l'étape de diminution ou d'augmentation d'effort est limitée à une durée prédéterminée (τ).

18. Procédé selon l'une des revendications 14 à 17, caractérisé en ce que, si, à l'issue d'un temps d'attente prédéterminé (T) à partir de la détection de franchissement de seuil maximum (Smax) ou respectivement seul minimum (Smin) la plus récente, aucune détection de franchissement de seuil minimum (Smin) ou respectivement de seuil maximum (Smax) n'a eu lieu, une étape de retour à l'effort nominal appliqué au pantographe est effectuée.

19. Procédé selon l'une des revendications 14 à 18, caractérisé en ce qu'il comprend en outre des étapes respectives de montée et de descente du pantographe (30), en réponse à des signaux respectifs de commande extérieure de montée (M) et de descente (D).

20. Procédé selon l'une des revendications 14 à 20, caractérisé en ce qu'il comprend en outre une étape de détection d'avarie au niveau de l'archet (3), suivie, en cas de détection effective, de l'exécution d'une étape de descente du pantographe (30).

## Patentansprüche

1. Vorrichtung (1) zum Einstellen der Anpreßkraft eines Scherenstromabnehmers (30) einer Schienenfahrzeug-Wageneinheit (10) gegen einen Kettenfahrleitungsdraht (2), wobei der Scherenstromabnehmer (30) an seinem oberen Ende einen mit dem Kettenfahrleitungsdraht (2) in mechanischem und elektrischem Kontakt befindlichen Bügel (3) umfaßt und mit Betätigungsmitteln (7, 34) mechanisch verbunden ist, die auf ihn an vorgegebenen Stellen und in einer vorgegebenen Richtung eine Nennkraft ausüben, wobei die Vorrichtung enthält:
   - Mittel (31, 40) zum Messen der Kontaktkraft zwischen dem Bügel (3) und dem Kettenfahrleitungsdraht (2) und zum Liefern von Informationen, die im wesentlichen der gemessenen Kraft entsprechen, wobei die Meßmittel (31, 40) in unmittelbarer Nähe des Bügels (3) angeordnet sind,
   - Mittel (5, 4a) zum übertragen der Meßinformationen von den Meßmitteln (31, 40) in einen geeigneten Bereich der Schienenfahrzeug-Wageneinheit (10),
   - Mittel (60, 20) zum Verarbeiten von Informationen, um die übertragenen Informationen sowie Einstellwertsignale zu verarbeiten und logische Steuersignale auszugeben, und

- Steuermittel (50) zum Steuern der Betätigungsmittel (7, 34) anhand der logischen Steuersignale, dadurch gekennzeichnet, daß die Einstellwertsignale außerdem eine vorbestimmte Maximalschwelle (Smax) der zulässigen Kontaktkraft und eine vorbestimmte Minimalschwelle (Smin) der zulässigen Kontaktkraft umfassen und daß die Steuermittel (50) die Betätigungsmittel (7, 34) anhand der logischen Steuersignale nur dann steuern, wenn die gemessene Kontaktkraft entweder größer als die Maximalschwelle (Smax) oder kleiner als die Minimalschwelle (Smin) ist.

2. Vorrichtung (1) gemäß Anspruch 1, dadurch gekennzeichnet, daß die Mittel (60, 20) zum Verarbeiten von Informationen Mittel (28, 29) umfassen, um die übertragenen Meßinformationen mit den Signalen der Minimalschwelle (Smin) der Kontaktkraft bzw. der Maximalschwelle (Smax) der Kontaktkraft zu vergleichen.

3. Vorrichtung (1) gemäß Anspruch 2, dadurch gekennzeichnet, daß die Einstellwertsignale außerdem externe Steuersignale zum Ausfahren (M) und zum Einfahren (D) des Scherenstromabnehmers (30) umfassen.

4. Vorrichtung (1) gemäß Anspruch 3, dadurch gekennzeichnet, daß die Betätigungsmittel (7, 34) wenigstens ein Pneumatikkissen (7) umfassen, das über mechanische Verbindungsmittel (6, 37, 31, 32, 33, 34) auf den Scherenstromabnehmer (30) eine einstellbare Kraft ausübt und mit Pneumatikversorgungsmitteln verbunden ist, die gegenüber den Steuermitteln (50) elektrisch isoliert (9) sind.

5. Vorrichtung (1) gemäß Anspruch 4, dadurch gekennzeichnet, daß die Steuermittel (50) Mittel (11, P1, P2, P3, P4) zum wahlweisen Versorgen des Pneumatikkissens (7) mit Luft in Abhängigkeit von Steuersignalen umfassen, die von den Mitteln (60, 20) zur Verarbeitung von Informationen ausgegeben werden.

6. Vorrichtung (1) gemäß Anspruch 5, dadurch gekennzeichnet, daß die Steuermittel (50) ein in Mittelstellung geschlossenes Pneumatik-Elektroventil (11) umfassen, das mit einem Enfleerungs-Elektroventil (P1) bzw. mit einem Auffüll-Elektroventil (P2) versehen ist und mit einem Elektroventil (P4) zum Einfahren mit kontrollierter Geschwindigkeit bzw. mit einem Elektroventil (P3) zum Ausfahren mit kontrollierter Geschwindigkeit verbunden ist, wobei jedes dieser Elektroventile (P1, P2, P3, P4) jeweils durch ein entsprechendes Steuersignal gesteuert wird, das von den Mitteln (60, 20) zur Verarbeitung von Informationen ausgegeben wird.

7. Vorrichtung (1) nach einem der Ansprüche 5 oder 6, dadurch gekennzeichnet, daß die Steuermittel (50) außerdem einen gesteuerten Regler (12) umfassen, der das Elektroventil (P3) versorgt und durch die Mittel (60, 20) zur Verarbeitung von Informationen entsprechend einem vorbestimmten Steuerverlauf f(v) in Abhängigkeit von der Geschwindigkeit (v) der Schienenfahrzeug-Wageneinheit (10) gesteuert wird.

8. Vorrichtung (1) gemäß Anspruch 7, dadurch gekennzeichnet, daß die Mittel (60, 20) zur Verarbeitung von Informationen Mittel (60) zur Aufbereitung und Filterung der von den Übertragungsmitteln (5) ausgegebenen Signalen sowie elektronische Steuermittel (20) umfassen, die enthalten:
   - die Vergleichsmittel (28, 29), die Mittel zum Ausgeben von Erfassungssignalen (d(Smin), d(Smax)) umfassen, wobei die Maxiamlschwellen-Vergleichsmittel (29) außerdem Mittel zum Erfassen einer Defektsituation auf Höhe des Bügels (3) anhand der übertragenen Informationen und zum Ausgeben eines Defektsignals (Sa) für ein planmäßiges Einfahren des Scherenstromabnehmers (30) umfassen,
   - Mittel (23) zum Steuern des Einfahrens des Scherenstromabnehmers (30), die mit den Maximalschwellen-Vergleichsmitteln (29) verbunden sind, die Signale der Erfassung der Maximalschwelle (d(Smax)) und des Defekts (Sa) sowie das externe Einfahr-Steuersignal (D) empfangen und entsprechende Steuersignale für das Enfleerungs-Elektroventil (P1) und das Elektroventil (P4) zum Einfahren mit kontrollierter Geschwindigkeit ausgeben, und Mittel (26) zum Steuern des Ausfahrens des Scherenstromabnehmers (30), die mit den Minimalschwellen-Vergleichsmitteln verbunden sind, das Signal der Erfassung der Minimalschwelle (d(smin)) empfangen und Steuersignale für das Auffüll-Elektroventil (P2) bzw. das Elektroventil (P3) zum Ausfahren mit kontrollierter Geschwindigkeit ausgeben.

9. Vorrichtung (1) gemäß Anspruch 8, dadurch gekennzeichnet, daß die Einfahr-Steuermittel (23) Mittel (21) umfassen, die anhand des Signals der Erfassung der Minimalschwelle (d(Smin)) ein Signal zum Steuern des Entleerens mit einer vorgegebenen Dauer (τ) ausgeben.

10

10. Vorrichtung (1) gemäß Anspruch 9, dadurch gekennzeichnet, daß die Einfahr-Steuermittel (23) ein logisches ODER-Gatter (22) mit zwei Eingängen umfassen, denen das Defektsignal (Sa) bzw. das externe Einfahr-Steuersignal (D) eingegeben wird, sowie ein zweites logisches ODER-Gatter (24) mit zwei Eingängen, denen das Entleerungs-Steuersignal bzw. der Ausgang des ersten logischen ODER-Gatters (24) eingegeben wird, wobei die jeweiligen Ausgänge des ersten und des zweiten logischen Gatters (22, 24) die Steuersignale für das Elektroventil (P4) zum Einfahren mit kontrollierter Geschwindigkeit bzw. das Entleerungs-Elektroventil (P1) liefern.

11. Vorrichtung (1) nach einem der Ansprüche 9 oder 10, dadurch gekennzeichnet, daß die Ausfahr-Steuermittel (26) ein drittes logisches ODER-Gatter (27) mit zwei Eingängen umfassen, denen das Signal der Erfassung der Minimalschwelle (d(Smin)) bzw. das externe Ausfahr-Steuersignal (M) eingegeben wird, wobei der Ausgang des dritten logischen ODER-Gatters (27) das Steuersignal für das Auffüll-Elektroventil (P2) und das Steuersignal für das Elektroventil (P3) zum Ausfahren mit kontrollierter Geschwindigkeit liefert.

12. Vorrichtung (1) nach einem der Ansprüche 1 bis 11, dadurch gekennzeichnet, daß die Mittel zum Messen der Kraft einen Mikrokrümmungen von Lichtleitfasern erfassenden Kraft-Meßwertaufnehmer (31, 40) umfassen, der in unmittelbarer Nähe wenigstens eines Kontaktstreifens (51) des Bügels (3) angebracht ist, und daß die Mittel zum Übertragen von Informationen ein Lichtleitfaserbündel (5) umfassen, das einerseits über Verbindungsmittel (4a) mit dem Kraft-Meßwertaufnehmer und andererseits über Aufbereitungs- und Filterungsmittel (60), die eine Einheit (13) zum Umwandeln der optischen Signale in elektrische Signale und eine Einheit (14) zum Filtern der umgewandelten Signale enthalten, mit dem Inneren des geeigneten Bereichs der Schienenfahrzeug-Wageneinheit (10) verbunden ist.

13. Vorrichtung (1) gemäß Anspruch 12, dadurch gekennzeichnet, daß der Kraft-Meßwertaufnehmer (40) eine Lichtleitfaser-Meßschicht (41) umfaßt, die zwischen einem Kontaktstreifen (51) und einer Bewehrung (43) des Bügels eingesetz ist, wobei an der Grenzfläche zwischen der Lichtleitfaser-Schicht (41) und dem Kontaktstreifen (51) eine Wärmeisolierschicht (45) angeordnet ist und wobei die so gebildete Gesamtheit durch Spannmittel (44a, 44b) unter einer Vorspannung gehalten wird.

14. Verfahren zum Steuern der Anpreßkraft eines Scherenstromabnehmers (30) einer Schienenfahrzeug-Wageneinheit (10) gegen einen Kettenfahrleitungsdraht (2), das in einer Vorrichtung gemäß einem der vorangehenden Ansprüche ausgeführt wird, wobei der Scherenstromabnehmer (30) mit gesteuerten Betätigungsmitteln (7) verbunden ist, die an ihn an vorbestimmten Stellen und in einer vorgegebenen Richtung eine Nennkraft anlegen, enthaltend einen Schritt des Messens der Kontaktkraft (Fc) zwischen dem Bügel (3) des Scherenstromabnehmers (30) und dem Kettenfahrleitungsdraht (2), einen Schritt des Vergleichens der gemessenen Kraft (Fc) mit den Einstellwerten, dadurch gekennzeichnet, daß die Einstellwerte eine vorbestimmte Maximalschwelle (Smax) der zulässigen Kontaktkraft und eine vorbestimmte Minimalschwelle (Smin) der zulässigen Kontaktkraft umfassen und daß das Verfahren einen Schritt des Erfassens des Überschreitens der Maximalschwelle (Smax) oder der Minimalschwelle (Smin) und einen Schritt des Modifizierens der Kraftsteuerung der Betätigungsmittel (7) umfaßt, der nur dann ausgeführt wird, wenn die gemessene Kontaktkraft (Fc) entweder die Maximalkraftschwelle (Smax) oder die Minimalkraftschwelle (Smin) überschreitet.

15. Verfahren gemäß Anspruch 14, dadurch gekennzeichnet, daß der Modifizierungsschritt dann, wenn die gemessene Kontaktkraft oberhalb der Maximalkraftschwelle (Smax) liegt, einen Schritt des Verringerns der durch die Betätigungsmittel (7, 34) ausgeübten Kraft umfaßt.

16. Verfahren gemäß Anspruch 15, dadurch gekennzeichnet, daß der Modifizierungsschritt dann, wenn die gemessene Kontaktkraft unterhalb der Minimalkraftschwelle (Smin) liegt, einen Schritt zum Zurückkehren zur durch die Betätigungsmittel (7) ausgeübten Nennkraft umfaßt.

17. Verfahren gemäß einem der Ansprüche 14 bis 16, dadurch gekennzeichnet, daß der Schritt des Verringerns oder des Erhöhens der Kraft auf eine vorgegebene Zeitdauer (τ) begrenzt ist.

18. Verfahren gemäß einem der Ansprüche 14 bis 17, dadurch gekennzeichnet, daß dann, wenn nach Ablauf einer vorgegebenen Wartezeit (T) seit der letzten Erfassung des Überschreitens der Maximalschwelle (Smax) bzw. der Minimalschwelle (Smin) keine Erfassung des Überschreitens der Minimalschwelle (Smin) bzw. der Maximalschwelle (Smax) stattgefunden hat, ein Schritt des Rückkehrens zur auf den Scherenstromabnehmer ausgeübten Nennkraft ausgeführt wird.

19. Verfahren gemäß einem der Ansprüche 14 bis 18, dadurch gekennzeichnet, daß es außerdem die Schritte des Ausfahrens bzw. des Einfahrens des Scherenstromabnehmers (30) aufgrund entsprechender externer Ausfahr-Steuersignale (M) bzw. Einfahr-Steuersignale (D) umfaßt.

20. Verfahren gemäß einem der Ansprüche 14 bis 20, dadurch gekennzeichnet, daß es außerdem einen Schritt des Erfassens eines Defekts auf Höhe des Bügels (3) umfaßt, dem im Falle einer tatsächlichen Erfassung die Ausführung eines Schritts des Einfahrens des Scherenstromabnehmers (30) folgt.

## Claims

1. Apparatus (1) for controlling the force by which a pantograph (30) of a railway train (10) bears on a catenary (2), the said pantograph (30) having at its top end a bow (3) in mechanical and electrical contact with the catenary (2), and being mechanically connected to actuating means (7, 34) which apply thereto a nominal force at predetermined points and in a predetermined direction, the apparatus comprising:
   - means (31, 40) for measuring the contact force between the bow (3) and the catenary (2) and for delivering data corresponding substantially to the measured force, said measuring means (31, 40) being situated in the immediate vicinity of the bow (3),
   - means (5, 4a) for transmitting the measurement data from said measuring means (31, 40) to an appropriate zone of the railway train (10),
   - data processing means (60, 20) for processing the transmitted data and reference signals and delivering logic control signals, and
   - control means (50) for controlling the said actuating means (7, 34) from said logic control signals, characterised in that the said reference signals also comprise a predetermined maximum admissible contact force threshold (Smax) and a predetermined minimum admissible contact force threshold (Smin) and in that the said control means (50) control said actuating means (7, 34) from the said logic control signals only when said measured contact force is either greater than the said maximum threshold (Smax) or less than the said minimum threshold (Smin).

2. Apparatus (1) according to Claim 1, characterised in that the said data processing means (60, 20) comprise means (28, 29) for comparing the measurement data transmitted respectively to the said minimum and maximum contact force threshold signals (Smin, Smax).

3. Apparatus (1) according to Claim 2, characterised in that the said reference signals also comprise external pantograph raising signals (M) and pantograph lowering control signals (D).

4. Apparatus (1) according to Claim 3, characterised in that the actuating means (7, 34) comprise at least one pneumatic cushion (7) applying a controllable force to the pantograph (30) by mechanical connecting means (6, 37, 32, 33, 34), said pneumatic cushion (7) being connected by electrically insulating pneumatic supply means (9) to the control means (50).

5. Apparatus (1) according to Claim 4, characterised in that the control means (50) comprise means (11, P1, P2, P3, P4) for selectively supplying the pneumatic cushion (7) with air in dependence on the control signals output by the data processing means (60, 20).

6. Apparatus (1) according to Claim 5, characterised in that the control means (50) comprise a closed-centre pneumatic solenoid valve (11) having respectively a bleed solenoid valve (P1) and an inflation solenoid valve (P2) and connected respectively to a controlled-speed lowering solenoid valve (P4) and a controlled-speed raising solenoid valve (P3), each of said solenoid valves (P1, P2, P3, P4) being respectively controlled by a corresponding control signal output by said data processing means (60, 20).

7. Apparatus (1) according to Claim 5 or 6, characterised in that the control means (50) also comprise a controlled regulator (12) supplying the solenoid valve (P3) and controlled by the data processing means (60, 20) in accordance with a predetermined control law f(v) in dependence on the speed (v) of the railway train (10).

8. Apparatus (1) according to Claim 7, characterised in that the data processing means (60, 20), comprise means (60) for conditioning and filtering the signals output by the transmission means (5) and electronic control means (20) comprising:

- said comparison means (28, 29) which comprise means for delivering detection signals (d(Smin), d-(Smax)), the maximum threshold comparison means (29) also comprising means for detecting a damage situation at the bow (3) from the transmitted data, and delivering a damage signal (Sa) for the purpose of systematic lowering of the pantograph (30).
- means (23) for controlling the lowering of the pantograph (30), connected to the maximum threshold comparison means (29), receiving the maximum threshold detection signals (d(Smax)) and damage signals (Sa) and the external lowering control signal (D) and delivering respective control signals for the bleed solenoid valve (P1) and the controlled-speed lowering solenoid valve (P4), and means (26) for controlling the raising of the pantograph (30) connected to the minimum threshold comparison means, receiving the minimum threshold detection signal (d(Smin)) and delivering respective control signals for the inflation solenoid valve (P2) and controlled-speed raising solenoid valve (P3).

9. Apparatus (1) according to Claim 8, characterised in that lowering control means (23) comprise means (21) for delivering, from the said minimum threshold detection signal (d(Smin)), a bleed control signal of predetermined duration (T).

10. Apparatus (1) according to Claim 9, characterised in that the lowering control means (23) comprise a first logic OR gate (22) having two inputs, to which there are respectively applied the damage signal (Sa) and the external lowering control signal (D), and a second logic OR gate (24) having two inputs to which there are respectively applied the bleed control signal and the output of the first logic OR gate (24), the respective outputs of the first and second logic gates (22, 24) respectively delivering the control signals for the controlled-speed lowering solenoid valve (P4) and the bleed solenoid valve (P1).

11. Apparatus (1) according to Claim 9 or 10, characterised in that the raising control means (26) comprise a third logic OR gate (27) having two inputs to which there are respectively applied the minimum threshold detection signal (d(Smin)) and the external raising control signal (M), the output of the third logic OR gate (27) delivering the control signal for the inflation solenoid valve (P2) and the control signal for the controlled speed raising solenoid valve (P3).

12. Apparatus (1) according to any one of Claims 1 to 11, characterised in that the force measuring means comprise a force sensor (31, 40) operating by optical fibre microcurvature, mounted in the immediate vicinity of at least one contact band (51) of the bow (3) and in that the data transmission means comprise a bunch (5) of optical fibres connected, on the one hand, to the force sensor by connecting means (4a) and, on the other hand, within the appropriate zone of the railway train (10), to the conditioning and filtering means (60) comprising a unit (13) for conversion of optical signals to electrical signals and a unit (14) for filtering the converted signals.

13. Apparatus (1) according to Claim 12, characterised in that the force sensor (40) comprises a layer of optical measuring fibres (41) inserted between a contact band (51) and a frame (43) of the bow, a layer of thermal insulant (45) being disposed as an interface between the optical fibre layer (41) and the contact band (51), the resulting assembly being kept prestressed by clamping means (44a, 44b).

14. A method of controlling the force by which a pantograph (30) of a railway train (10) bears on a catenary (2), used in the apparatus according to any one of the preceding claims, the pantograph (30) being connected to controlled actuating means (7) which apply thereto a nominal force at predetermined points and in a predetermined direction, comprising a step in which the contact force (Fc) is measured between the bow (3) of the pantograph (30) and the catenary (2), a step in which the measured force (Fc) is compared with reference values, characterised in that the said reference values comprise a predetermined maximum admissible contact force threshold (Smax) and a predetermined minimum admissible force threshold (Smin) and in that it comprises a step for detecting clearance from the said maximum threshold (Smax) or from the said minimum threshold (Smin) and a step for modifying the control of the force of the said actuating means (7), which is effected only when the measured contact force (Fc) exceeds either the said maximum force threshold (Smax) or the said minimum force threshold (Smin).

15. A method according to Claim 14, characterised in that if the measured contact force is greater than the maximum force threshold (Smax) the modification step comprises a force reduction step which is applied by the actuating means (7, 34).

16. A method according to Claim 15, characterised in that if the measured contact force is less than the minimum force ratio (Smin), the modification step comprises a step for returning to the nominal force applied to the actuating force applied by the actuating means (7).

17. A method according to any one of Claims 14 to 16, characterised in that the force reduction or increase step is limited to a predetermined duration (*T*).

18. A method according to any one of Claims 14 to 7, characterised in that if, after a predetermined waiting time (T) after the most recent detection of clearance from the maximum threshold (Smax) or the minimum threshold (Smin) respectively, no clearance from the minimum threshold (Smin) or the maximum threshold (Smax) respectively has been detected, then a step of returning to the nominal force applied to the pantograph is effected.

19. A method according to any one of Claims 14 to 18, characterised in that it also comprises respective pantograph raising and lowering steps in response to external raising control signals (M) and lowering control signals (D) respectively.

20. A method according to any one of Claims 14 to 10, characterised in that it also comprises a step for detection of damage at the bow (3) followed, in the case of effective detection, by performance of a pantograph lowering step.

FIG_1

FIG_2

$$\underline{\mathsf{FIG.3}}$$

$$\underline{\mathsf{FIG.4}}$$

$$\underline{\mathsf{FIG.5}}$$